# FASCICULE DE BREVET EUROPEEN

(11) **EP 0 970 496 B1**
(45) Date de publication et mention de la délivrance du brevet: **26.05.2004**
(21) Numéro de dépôt: 98906976.0
(22) Date de dépôt: 05.02.1998
(51) Int. Cl.: H01G 9/038, H01G 9/058

(54) **SUPERCONDENSATEUR DU TYPE DOUBLE COUCHE COMPRENANT UN ELECTROLYTE ORGANIQUE LIQUIDE**
DOPPELSCHICHT-SUPERKONDENSATOR MIT FLÜSSIGEM ORGANISCHEM ELEKTROLYT
DOUBLE LAYER HIGH POWER CAPACITOR COMPRISING A LIQUID ORGANIC ELECTROLYTE

(30) Priorité: 06.02.1997 FR 9701351
(43) Date de publication de la demande: 12.01.2000
(73) Titulaire: Electricité de France (Service National), 75008 Paris (FR); Bollore, 29000 Quimper (FR)
(72) Inventeur: PENNEAU, Jean-François, F-77210 Samoreau (FR); CAPITAINE, François, F-64600 Anglet (FR); HERLEM, Guillaume, F-78000 Versailles (FR)
(74) Mandataire: Texier, Christian
(86) Numéro de dépôt international: PCT/FR1998/000211
(87) Numéro de publication internationale: WO 1998/035369

(56) Documents cités:
- EP-A- 0 694 935
- US-A- 3 931 552
- PATENT ABSTRACTS OF JAPAN vol. 017, no. 249 (E-1366), 18 mai 1993 & JP 04 369817 A (JAPAN CARLIT CO LTD:THE), 22 décembre 1992,
- PATENT ABSTRACTS OF JAPAN vol. 014, no. 573 (E-1015), 19 décembre 1990 & JP 02 248025 A (MATSUSHITA ELECTRIC IND CO LTD), 3 octobre 1990,
- PATENT ABSTRACTS OF JAPAN vol. 096, no. 009, 30 septembre 1996 & JP 08 119615 A (KURARAY CO LTD;KURARAY CHEM CORP), 14 mai 1996,

## Description

L'invention concerne des supercondensateurs ou condensateurs de forte capacité, comprenant un électrolyte constitué d'une solution organique d'un sel.

Un supercondensateur est un élément intermédiaire entre le condensateur et l'accumulateur, en terme d'énergie et de puissance. Un accumulateur fournit beaucoup d'énergie (40 à 150 Wh/kg) mais cet élément est limité en puissance (< 5 10² W/kg). Un condensateur fournit une puissance impulsionnelle élevée (10⁴ à 10⁶ W/kg), mais son énergie massique associée est faible (< 0,1 Wh/kg). Par supercondensateurs, il faut entendre tout système électrochimique utilisant au moins les propriétés de surface d'un matériau idéalement polarisable de haute surface spécifique. En d'autres termes, le supercondensateur est un condensateur électrochimique de capacité élevée.

L'origine du fonctionnement d'un supercondensateur est basée sur le principe de la double couche. Durant la charge du supercondensateur, il y a accumulation d'espèces ioniques de part et d'autre des deux électrodes, à l'interface matériau idéalement polarisable/électrolyte. Il peut y avoir également des réactions d'oxydo-réduction en présence de sites rédox conduisant à un système pseudo-capacitif.

Les supercondensateurs basés sur le principe de la double couche ont été fabriqués à partir de matériaux variés. Ces supercondensateurs sont assemblés à partir de deux électrodes carbonées de haute surface spécifique.

En général, les supercondensateurs comprennent en outre des amenées de courant, un séparateur situé entre les électrodes, un électrolyte et un emballage étanche vis-à-vis de l'environnement.

Un des éléments clef d'un supercondensateur est constitué par l'électrolyte qui, typiquement, comprend une solution d'un sel, c'est-à-dire une combinaison d'un sel et d'un solvant.

En général, les électrolytes sont liquides, de basse viscosité et présentent une conductivité élevée pour une large gamme de températures. Ils doivent être également d'un faible coût, chimiquement et électrochimiquement stables, et compatibles avec le carbone ou les autres matériaux constituant les électrodes.

On a déjà proposé de nombreux électrolytes liquides destinés à répondre à ces exigences.

La demande de brevet EP-A-704 871 décrit un électrolyte constitué d'une solution organique d'un sel d'ammonium quaternaire. Les exemples 1 et 2 mentionnent particulièrement une solution de γ-butyrotactone à 20 % de phtalate de monotétraméthyl ammonium ou une solution de γ-butyrolactone à 20 % d'acide maléique triéthylméthyl ammonium.

La demande de brevet EP-A-694 935 décrit une solution dans un solvant nitrile d'un sel constitué d'un cation ammonium et d'anions choisis notamment parmi le trifluorométhyl sulfonate, le bistrifluorométhylsulfurylimide, le trisfluorométhylsulfurylcarbanion, le tétrafluoroborate, l'hexafluorophosphate, l'hexafluoroarsenate, le perchlorate. Ce document cite particulièrement le tétraalkylammonium tétrafluoroborate.

Le brevet US 5 450 279 décrit une solution de tétrafluoroborate de tétraéthylammonium ou perchlorate de tétraéthylammonium dans un solvant organique tel que le carbonate de propylène ou la γ-butyrolactone.

Le brevet US 4 562 511 décrit un supercondensateur double couche formée de deux électrodes séparées par un séparateur imprégné d'un électrolyte. Chaque électrode est constituée d'une couche de carbone polarisable et d'une couche conductrice. L'électrolyte est une solution de γ-butyrolactone ou carbonate de propylène et de perchlorate de tétraéthylammonium.

La demande de brevet EP-A-660 346 décrit un supercondensateur double couche dont l'électrolyte est une solution organique de sel de lithium ou d'ammonium. Comme solvants sont cités notamment le carbonate d'éthylène, le carbonate de propylène, le carbonate de butylène, le carbonate de diméthyle, la γ-butyrolactone, l'acétonitrile, le 1,2-diméthoxyéthane, et comme sels, les sels de lithium LiAsF₆, LiBF₄, LiPF₆, LiClO₄ ou d'ammonium.

Le document Chemical Abstract, vol. 106, n° 10, décrit un électrolyte à base de propylène carbonate et d'un tétrafluoroborate enfermé dans un éther couronne, probablement pour améliorer la solubilité du tétrafluoroborate.

Le Patent Abstracts of Japan, vol. 017, n° 249, décrit un électrolyte formé d'un sel d'ammonium quaternaire de l'acide tétrafluoroborique en solution dans la θ-butyrolactone éventuellement en mélange avec l'acétonitrile ou le nitrométhane.

Le Patent Abstracts of Japan, vol. 014, n° 573 décrit un électrolyte formé de sels de phosphonium et d'ammonium en solution dans le propylène carbonate.

Bien d'autres supercondensateurs ont été décrits faisant appel à d'autres solutions organiques, par exemple à basé de potasse, tels que le document WO-A-94/28563.

Le document US-A-3931552 décrit diverses compositions d'électrolyte pour condensateurs, et notamment une composition d'électrolyte à base d'une solution organique d'un chromate de métal alcalino-terreux dans un solvant comprenant du diméthylformamide.

Il existe néanmoins un besoin pour fournir des systèmes électrolytiques améliorés qui procurent une capacitance optimum pour réaliser des supercondensateurs d'une puissance élevée tout en permettant une production de masse à faible coût.

De façon surprenante, les inventeurs ont trouvé qu'il était possible d'utiliser avantageusement un électrolyte constitué d'une solution organique d'un sel dont le cation est le cation sodium ou potassium ou le cation d'un métal alcalino-terreux choisi parmi le magnésium ou le calcium dans un solvant comprenant un ou plusieurs amides.

L'invention concerne donc un supercondensateur idéalement polarisable constitué d'une électrode positive et de son collecteur de courant, d'une électrode négative et de son collecteur de courant, lesdites électrodes comprenant un matériau carboné à haute surface spécifique, d'un séparateur et d'un étectrolyte liquide non aqueux imprégnant ledit séparateur et lesdites électrodes, caractérisé en ce que l'électrolyte liquide no3 aqueux est une solution organique d'un sel correspondant à un cation de mobilité élevée, choisi dans la famille comprenant un sel de sodium ou de potassium ou un sel de métal alcalino-terreux choisi parmi le magnésium ou le calcium, lesdits sels étant présents seuls ou en mélange dans un solvant comprenant un ou plusieurs amides.

Les propriétés requises pour un matériau carboné utilisable en tant que constituant d'électrodes sont une surface spécifique par unité de poids élevée, une faible résistance électrique et une bonne stabilité électrochimique.

Les matériaux carbonés peuvent se présenter sous forme de poudres ou de fibres et sont obtenus par exemple à partir de brai de pétrole, de résine phénolique, de coquilles de noix de coco et d'autres produits équivalents. De tels matériaux carbonés sont par exemple décrits dans les documents US 4 562 511 ou US 5 450 279.

L'électrode est à base d'un matériau carboné, par exemple un charbon actif de surface spécifique comprise entre 300 et 3000 m²/g, de préférence supérieure à 1000 m²/g.

Selon une variante avantageuse, chaque électrode est formée d'un film composite poreux d'un matériau polymérique, de haute surface spécifique, notamment supérieure à 10 m²/g, chargé en matériau carboné, notamment le charbon actif, et de préférence supérieure à 20 m²/g.

Le matériau polymérique est formé d'élastomères ou de polymères thermoplastiques qui sont insolubles dans les solvants aqueux et/ou organiques et qui assurent la cohésion du produit (polymères ou élastomères de structure) et de polymères ou élastomères thermoplastiques à groupements polaires qui subsistent dans le film après la mise en oeuvre du procédé de fabrication qui conduit audit film poreux.

Parmi les élastomères ou polymères insolubles, on cite notamment les polyoléfines telles que les polypropylènes, les polyéthylènes, les copolymères d'éthylène et de propylène. Ces polyoléfines sont telles qu'elles peuvent être produites sous forme de film et sont bien connues notamment en tant que films d'emballage. Il s'agit par exemple de polyéthylène de basse ou haute densité comprenant éventuellement à titre de comonomère une proportion plus ou moins importante d'une alpha-oléfine.

Il peut s'agir également de polyamides tels que les polyéthers bloc polyamide, de polyimides, de copolymères vinyliques à forte proportion de monomères d'éthylène tels que le polyéthylène vinylacétate à forte proportion de monomères d'éthylène, des polymères acryliques, les polymères aromatiques comme les polystyrènes, tels que le copolymère polystyrène-butadiène, des polymères fluorés tels que le polyfluorure de vinylidène, des copolymères formés à partir des monomères appartenant à l'une des familles citées ci-dessus, par exemple les copolymères de fluorure de vinylidène et d'hexafluoropropylène, les copolymères de fluorure de vinylidène et de trifluoroéthylène.

De préférence, les élastomères ou polymères thermoplastiques insolubles dans les solvants sont choisis dans le groupe des polyoléfines.

Parmi les polymères solubles, on cite notamment les polymères qui sont solubles dans les solvants suivants : l'eau, les alcools, le diméthylformamide, le diméthylsulfoxyde, le tétrahydrofuranne, l'acétone.

Sous réserve bien entendu que le dégré de polymérisation soit approprié à une élimination par solvant, les polymères solubles sont notamment choisis parmi les polyéthers tels que le polyoxyéthylène, le polyoxypropylène, les polyalcools tels que l'alcool polyvinylique, les copolymères éthylène alcool vinylique.

On cite également les polymères qui peuvent être calcinés selon les méthodes habituelles.

Les polymères calcinables correspondent aux polymères solubles dans les solvants cités ci-dessus et peuvent être encore choisis parmi les polymères dont la température de décomposition est inférieure à celle du polymère ou élastomère de structure, par exemple la cellulose.

Le choix de ces polymères peut être effectué de manière connue par des tests simples à la portée de l'homme du métier.

De préférence, le film composite comprend au moins 30 % en poids de charges, avantageusement entre 40 et 90 %, de préférence entre 50 et 85 %.

Une autre caractéristique du film composite poreux utilisé dans le supercondensateur selon l'invention réside dans le fait qu'il se présente sous une forme homogène et régulière, c'est-à-dire que les charges sont intimement mélangées au matériau polymérique, à la différence par exemple des feuilles obtenues par enduction d'un mélange de charges carbonées avec une faible proportion de polymère liant du type polytétrafluoroéthylène.

Les films composites poreux présentent l'avantage de pouvoir être mis en oeuvre selon la technologie du bobinage.

Ces films sont auto-supportés, c'est-à-dire qu'ils évitent l'utilisation d'un support.

Un procédé de préparation d'un film composite poreux tel que décrit précédemment consiste en ce que :
a) on forme un mélange comprenant un ou plusieurs polymères insolubles, un ou plusieurs polymères solubles ou calcinables, une ou plusieurs charges à haute surface spécifique,
b) on extrude ledit mélange de façon à former un film précurseur extrudé,
c) on élimine le ou les polymères solubles ou calcinables du film précurseur extrudé,
d) on récupère le film composite poreux.

Ledit procédé est donc un procédé d'extrusion-élimination permettant d'obtenir un film composite de haute surface spécifique.

Par l'expression "élimine" on entend qu'une partie substantielle des polymères solubles ou calcinables soit évacuée pour former des pores, étant entendu qu'il est très peu probable d'éliminer totalement ces polymères du fait notamment de leur affinité pour le charbon actif.

Dans la phase a) du procédé, on mélange de façon homogène, que ce soit par mise en solution ou suspension, l'ensemble des constituants, à savoir un ou plusieurs polymères insolubles en solvant et qui correspondent au matériau polymérique formant la structure du film composite, un autre polymère ou d'autres polymères solubles en solvant ou calcinables et une ou plusieurs charges à haute surface spécifique sachant que les polymères assurant la cohésion du film composite (polymères insolubles) ainsi que les charges à haute surface spécifique ne sont pas éliminés lors de l'étape c). Le mélange peut également être réalisé au moyen de l'extrudeuse permettant de mettre en oeuvre l'étape b).

Parmi les polymères solubles qui seront éliminés lors de l'étape c), on peut choisir tous les polymères solubles qui peuvent être mélangés selon l'étape a), et l'on cite notamment les polymères qui sont solubles par exemple dans l'eau, le diméthylformamide, le diméthylsulfoxyde, le tétrahydrofuranne, l'acétone.

Sous réserve bien entendu que le degré de polymérisation soit approprié à une élimination par solvant, les polymères solubles sont notamment choisis parmi les polyéthers tels que le polyoxyéthylène, le polyoxypropylène, les polyalcools tels que l'alcool polyvinylique, les copolymères éthylène alcool vinylique.

En tant que polymères qui peuvent être éliminés pour former des pores, on cite également les polymères qui peuvent être calcinés selon les méthodes habituelles.

Les polymères calcinables peuvent être choisis parmi les polymères dont la température de décomposition est inférieure à celle du polymère ou élastomère de structure, par exemple la cellulose.

Le choix de ces polymères peut être effectué de manière connue par des tests simples à la portée de l'homme du métier.

Le mélange des différents constituants du produit est effectué à température appropriée, notamment au moyen d'une extrudeuse. Dans ce cas, les étapes a) et b) sont effectuées simultanément pour donner un produit intermédiaire précurseur présentant une très faible surface spécifique (inférieure à 1 m²/g environ).

Le produit précurseur peut être extrudé à nouveau sous la forme d'un film, notamment un film mince dont l'épaisseur est inférieure à environ 300 µm.

Selon une variante avantageuse, l'étape b) est donc effectuée en deux étapes :
- une première étape d'extrusion (i) consistant à former des granulés,
- une seconde étape d'extrusion (ii) consistant à former un film.

La première étape est avantageusement effectuée dans une extrudeuse bivis co-rotative, avec une filière à joncs par exemple, alors que la seconde étape est avantageusement effectuée dans une extrudeuse monovis avec une filière plate.

Le produit précurseur extrudé, soit sous forme de granulés, soit sous forme de films est ensuite soumis à l'étape c) d'élimination permettant d'évacuer le polymère soluble.

Cette étape d'élimination peut être effectuée notamment par solubilisation du polymère soluble par mise en contact de celui-ci avec un solvant approprié.

On peut également effectuer une calcination selon un procédé connu qui consiste à monter lentement la température jusqu'à la température de dégradation du polymère à éliminer.

Les films sont ensuite récupérés et présentent une surface spécifique "BET" supérieure à environ 10 m²/g, de préférence supérieure à environ 20 m²/g.

Les électrodes peuvent également être formées d'un tissu carboné et activé de surface spécifique supérieure à 1000 m²/g.

D'autres électrodes carbonées peuvent être réalisées à partir d'une feuille de métal, par exemple d'aluminium, jouant le rôle de collecteur, sur laquelle on dépose une pâte contenant une poudre de charbon activé en tant que composant principal et un liant à base d'une résine fluorée ou équivalente par exemple.

Sur un tissu de fibres de carbone activé, on peut également déposer par pulvérisation à plasma une couche d'aluminium.

Bien entendu, l'invention n'est pas limitée à ces formes de réalisation d'électrodes et d'autres réalisations pourront également être envisagées sans sortir du cadre de l'invention.

La solution d'électrolyte est à base d'un solvant polaire aprotique comprenant un ou plusieurs amides. Parmi ces solvants, on choisit ceux qui présentent une constante diélectrique (ε) élevée, une faible viscosité et qui conservent leur état liquide sur une large gamme de températures.

Les amides répondent à la formule : 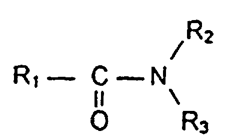 dans laquelle:
R₁ est un atome d'hydrogène ou un radical alkyle de C₁ à C₃, notamment méthyle, éthyle, n-propyle,
R₂, R₃ identiques ou différents sont l'atome d'hydrogène ou un radical méthyle, éthyle ou propyle, de préférence l'atome d'hydrogène ou le radical méthyle.

Parmi les amides, on cite notamment le diméthylformamide, le formamide, le N-méthyle formamide, le N-méthyle propionamide, le N,N-diméthyle acétamide seuls ou en mélange..

Le solvant polaire peut également comprendre comme composé minoritaire les esters, les nitriles, les carbonates. Le terme minoritaire signifie que ledit composé n'affecte pas sensiblement les propriétés du solvant (< 20 % en poids de préférence).

Parmi les esters, on cite notamment les esters cycliques tels que la γ-butyrolactone.

Parmi les carbonates, on cite notamment les carbonates cycliques tels que le propylène carbonate.

Parmi les nitriles, on cite notamment l'acétonitrile.

Ces solvants peuvent être utilisés seuls ou en mélange.

De préférence, afin d'abaisser la viscosité de la solution, le solvant est associé à un co-solvant susceptible d'abaisser la viscosité de la solution.

On rappellera en effet que pour un fonctionnement optimum de l'électrolyte, il est souhaitable que la viscosité ne soit pas trop élevée et en général comprise entre 0,0002 et 0,003 Pa.s (0,2 et 3 cps) à 25°C.

Le co-solvant est choisi parmi le formate de méthyle, le formate d'éthyle, le carbonate de diméthyle, le carbonate de diéthyle, l'acétate de méthyle, l'acétate d'éthyle, le diméthoxy méthane, le diméthoxy éthane, le diéthoxy méthane, le diéthoxy éthane, le dioxolane, le tétrahydrofuranne, l'acétonitrile.

De préférence le sel est présent dans la solution à une concentration de 0,3 à 3 moles par litre.

La mobilité élevée des cations sodium, potassium, magnésium et calcium, par rapport aux cations lithium, permet d'obtenir des puissances plus élevées, ou en d'autres termes, minimise les termes résistifs.

Les sels de sodium ou de potassium sont de préférence choisis dans le groupe constitué par NaCl, NaBr, NaBF₄, NaPF₆, NaClO₄, NaRSO₃, R étant un radical inférieur perfluoroalkyle (de 1 à 6 atomes de carbone, notamment CF₃). NaAsF₆, NaSCN, KF, KCl, KBr, KBF₄, KPF₆, KNO₃, KClO₄, KRSO₃, R étant un radical inférieur perfluoroalkyle (de 1 à 6 atomes de carbone, notamment CF₃), KAsF₆ ou KSCN.

Les sels de magnésium ou de calcium sont de préférence choisis dans le groupe constitué par MgCl₂, MgSO₄, Mg(ClO₄)₂, CaCl₂, Ca(NO₃)₂, CaSO₄ ou Ca(ClO₄)₂.

Le séparateur présent entre les deux électrodes est un séparateur poreux conducteur ionique. Le séparateur est, par exemple, constitué d'un film microporeux de polyéthylène.

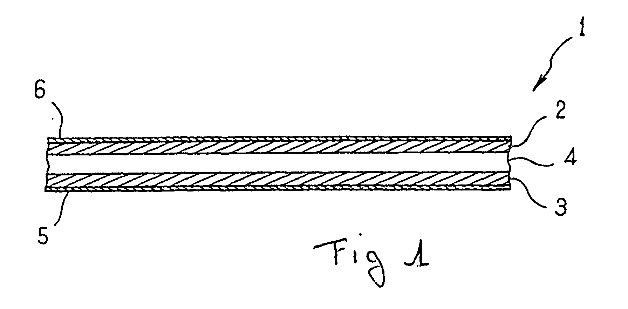

L'invention va maintenant être décrite à l'aide de plusieurs exemples particuliers, donnés à titre non limitatif, et du dessin annexé qui représente une coupe transversale schématique d'un supercondensateur selon l'invention.

Selon le dessin annexé, le supercondensateur 1 est formé de deux électrodes 2, 3 composites carbonées, d'un film polymère en polypropylène chargé de charbon actif. Les deux électrodes sont recouvertes d'un collecteur de courant 6, 5, et séparées par un séparateur 4.

Un électrolyte liquide d'une solution organique utilisée dans le supercondensateur selon l'invention imprègne les deux électrodes.

### Exemple 1

L'électrolyte est constitué de diméthyl formamide et de tétrafluoroborate de sodium. La concentration en sel est de 1,3 mole par litre. La conductivité de l'électrolyte à 25°C et de 22 mS/cm.

### Exemple 2

L'électrolyte est formé d'une solution de thiocyanate de potassium dans le formamide. La concentration en sel est de 2,8 moles par litre et la conductivité de l'électrolyte à 25°C est de 22 mS/cm.

L'exemple 2 est reproduit avec d'autres solvants et d'autres sels de sodium et potassium (exemples 3, 4 et 5).

Par ailleurs, des essais comparatifs ont été effectués avec l'hexafluorophosphate de lithium et le tétrafluoroborate de lithium (exemples 6 et 7).

Les résultats sont réunis dans le tableau ci-après. Ces essais montrent les avantages apportés par les électrolytes selon l'invention. Les abréviations utilisées sont bien connues et ont les significations suivantes :
κₘₐₓ est indiqué en millisiemens/cm (mS/cm)
FA est le formamide,
NMF est le méthylformamide,
DMF est le diméthylformamide
NMP est le méthylpropionamide,
DMA est le diméthylacétamide.

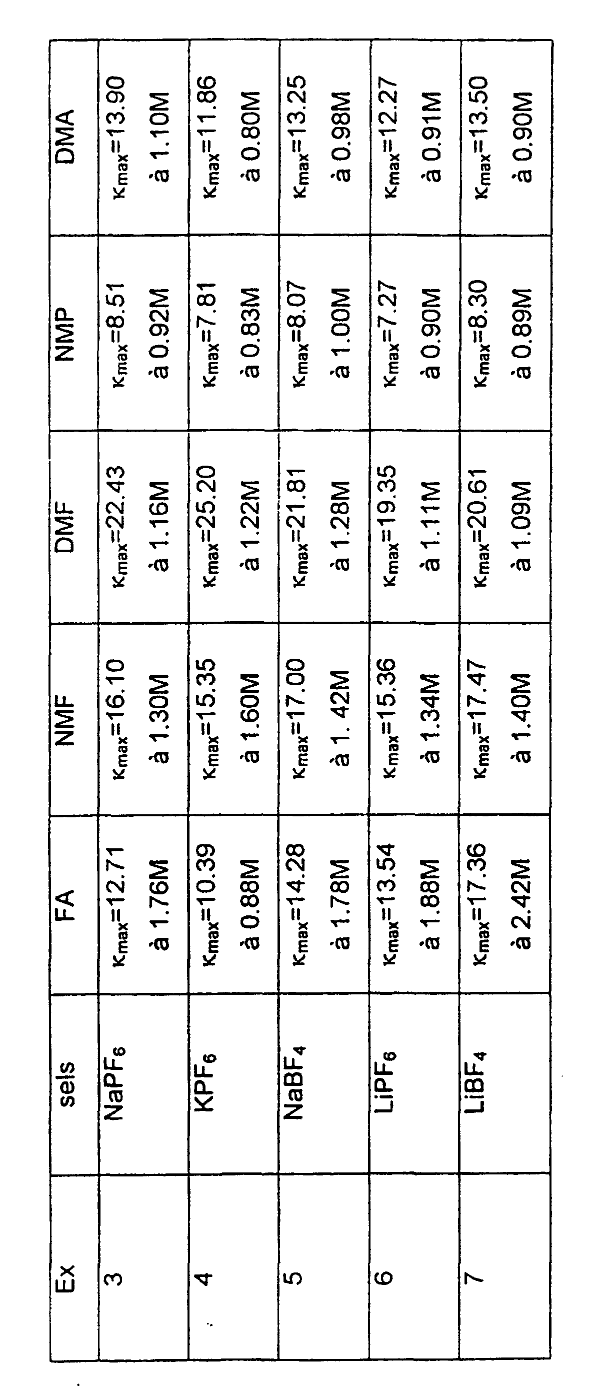

Les électrodes peuvent également être sous la forme d'un film obtenu selon le procédé suivant.

Les proportions massiques des composés (poudres) de départ sont les suivantes :
- charbon actif 40 % (de surface spécifique 1250 m²/g)
- copolymère éthylène propylène 10%
- polyoxyéthylène 50 % (POE 300 000).

L'ensemble des constituants en poudre est mélangé de façon la plus homogène possible par mélange au moyen d'une extrudeuse bivis co-rotative de longueur 25D, avec deux zones de malaxage et trois zones de transport. La machine utilisée est une bivis de diamètre 19 mm et le profil de température utilisé est le suivant : 160/170/180/190/200 °C
Pression filière : 10,5 MPa
Nombre de tours par minute : 400
Débit: 1.8 kg/h.

Les granulés obtenus sont introduits dans une monovis de longueur 30D (D = diamètre) pour une extrusion d'un primaire. La machine utilisée est une bivis de diamètre 30 mm et le profil de température utilisé est le suivant : 160/170/180/190/220°C.
Pression filière : 17,5 MPa
Nombre de tours par minute: 15
Débit : 2.5 kg/h. Le film obtenu a une épaisseur de 180 µm.

L'étape suivante consiste à plonger le film obtenu dans de l'eau à température ambiante pendant un temps de séjour de 5 minutes. Le film est alors séché à 40°C pendant 1 heure.

Les proportions massiques moyennes des composés après traitement sont les suivantes :
- charbon actif 60%
- copolymère éthylène propylène 15%
- polyoxyéthylène 25%

Il est alors possible de métalliser à l'aluminium (par exemple : 0,5 □/Ω) les films obtenus dans une machine à métalliser, à une pression de l'ordre de 0,01 Pa (10⁻⁴ mbar).

La caractérisation physique des films obtenus, métallisés ou non, conduit aux données suivantes :
- élongation à la rupture en %: 0,89 à 20°C ; 1,2 à 40°C ; 1,68 à 60°C
- tension de bobinage (noyau de 6 mm de diamètre) : 0.05 g/µm/mm.
- capacité électrochimique de 26 F/g d'électrode selon la méthode décrite à l'exemple 1.
- surface spécifique "BET" de inférieure à 1 m²/g de film à la sortie de l'extrusion, et surface spécifique "BET" de 60 m²/g de film après passage dans l'eau, par immersion pendant environ cinq minutes.

Les supercondensateurs selon l'invention présentent plusieurs avantages à savoir :
- coût des sels nettement inférieur à leurs homologues sels de lithium ou d'ammonium quaternaire.
- conductivité des électrolytes élevée souvent supérieure à leurs homologues sels de lithium (supérieure à 20 mS/cm).
- domaine d'électroactivité autorisant un cyclage de l'élément sous une différence de potentiel supérieure ou égale à 2,5 V.
- bonne stabilité électrochimique.
- bonne tenue en température (environ -25 à +85°C).

Ces électrolytes sont plus particulièrement destinés à être utilisés en tant que conducteurs ioniques dans la réalisation de systèmes de type supercondensateur pour le stockage électrochimique de l'énergie.

Ces systèmes permettent de satisfaire des appels de puissance compris entre quelques centaines de millisecondes et quelques dizaines de minutes. Les applications couvrent l'ensemble de la filière concernant le stockage électrochimique de l'énergie. De préférence, il s'agit des applications dans les domaines du portable, du stationnaire et de l'embarquer et en général, les applications dans le domaine de l'électronique, du génie électronique et de l'électrotechnique.

## Revendications

1. Supercondensateur idéalement polarisable constitué d'une électrode positive (2) et de son collecteur de courant, d'une électrode négative (3) et de son collecteur de courant, lesdites électrodes comprenant un matériau carboné de haute surface spécifique, d'un séparateur (6) et d'un électrolyte liquide non aqueux imprégnant ledit séparateur et lesdites éféctrodes; **caractérisé en ce que** l'électrolyte liquide non aqueux est une solution organique d'un sel correspondant à un cation de mobilité élevée, choisi dans la famille comprenant un sel de sodium ou de potassium ou un sel de métal alcalino-terreux choisi parmi le magnésium ou le calcium, seul ou en mélange dans un solvant comprenant un ou plusieurs amides.

2. Supercondensateur selon la revendication 1, **caractérisé en ce que** le matériau carboné à haute surface spécifique (BET) présente une surface spécifique comprise entre 300 et 3000 m²/g.

3. Supercondensateur selon la revendication 2, **caractérisé en ce que** le matériau carboné à haute surface spécifique (BET) présente une surface spécifique supérieure à 1000 m²/g.

4. Supercondensateur selon l'une des revendications 1 à 3, **caractérisé en ce que** chaque électrode est formée d'un film de matériau polymérique de surface spécifique (BET) supérieure à 10 m²/g, de préférence supérieure à 20 m²/g chargé en matériau carboné.

5. Supercondensateur selon la revendication 4, **caractérisé en ce que** le matériau polymérique comprend des polymères choisis dans le groupe constitué par les polyoléfines.

6. Supercondensateur selon la revendication 1, **caractérisé en ce que** chaque électrode est formée d'un tissu carboné et activé de surface spécifique (BET) supérieure à 1000 m²/g.

7. Supercondensateur selon l'une des revendications précédentes, **caractérisé en ce que** la solution est à base d'un solvant polaire aprotique comprenant un amide de formule : 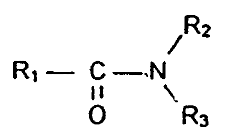 dans laquelle:
R₁ est un atome d'hydrogène ou un radical alkyle de C₁ à C₃,
R₂, R₃ identiques ou différents sont l'atome d'hydrogène ou un radical méthyle, éthyle ou propyle.

8. Supercondensateur selon la revendication 7, **caractérisé en ce que** l'amide est choisi dans le groupe constitué par le diméthylformamide, le formamide, le N-méthyle formamide, le N-méthyle propionamide, le N,N-diméthyle acétamide seuls ou en mélange.

9. Supercondensateur selon la revendication 1, **caractérisé en ce que** la solution organique comprend de façon minoritaire un ou plusieurs solvants choisis dans le groupe constitué par les esters, les nitriles, les carbonates.

10. Supercondensateur selon la revendication 9, **caractérisé en ce que** les solvants minoritaires sont choisis dans le groupe constitué par le propylène carbonate, la γ-butyrolactone, l'acétonitrile, seuls ou en mélange.

11. Supercondensateur selon la revendication 1, **caractérisé en ce que** le solvant est en mélange avec un co-solvant susceptible d'abaisser la viscosité de la solution.

12. Supercondensateur selon la revendication 11, **caractérisé en ce que** le co-solvant est choisi dans le groupe constitué par le formate de méthyle, le formate d'éthyle, le carbonate de diméthyle, le carbonate de diéthyle, l'acétate de méthyle, l'acétate d'éthyle, le diméthoxy méthane, le diméthoxy éthane, le diéthoxy méthane, le diéthoxy éthane, le dioxolane, le tétrahydrofuranne, l'acétonitrile.

13. Supercondensateur selon la revendication 1, **caractérisé en ce que** le sel est présent à une concentration de 0,3 à 3 moles par litre.

14. Supercondensateur selon la revendication 1 ou 13, **caractérisé en ce que** les sels de sodium ou de potassium sont choisis dans le groupe constitué par NaCl, NaBr, NaBF₄, NaPF₆, NaClO₄, NaRSO₃, R étant un radical inférieur perfluoroalkyle (de 1 à 6 atomes de carbone, notamment CF₃), NaAsF₆, NaSCN, KF, KCl, KBr, KBF₄, KPF₆, KNO₃, KClO₄ ,KRSO₃, R étant un radical inférieur perfluoroalkyle (de 1 à 6 atomes de carbone, notamment CF₃), KAsF₆ ou KSCN.

15. Supercondensateur selon la revendication 1 ou 13, **caractérisé en ce que** les sels d'alcalinoterreux sont choisis dans le groupe constitué par MgCl₂, MgSO₄, Mg(ClO₄)₂, CaCl₂, Ca(NO₃)₂, CaSO₄ ou Ca(ClO₄)₂.

## Patentansprüche

1. Ideal polarisierbarer Superkondensator, welcher aus einer positiven Elektrode (2) und ihrem Stromkollektor, einer negativen Elektrode (3) und ihrem Stromkollektor, wobei die Elektroden ein kohlenstoffhaltiges Material von hoher spezifischer Oberfläche umfassen, einem Separator (6) und einem flüssigen, nicht-wässrigen Elektrolyt, welcher den Separator und die Elektroden imprägniert, gebildet wird, **dadurch gekennzeichnet, dass** der flüssige, nicht-wässrige Elektrolyt eine organische Lösung eines Salzes, welches einem Kation von hoher Mobilität entspricht, ausgewählt in der Familie umfassend ein Natrium- oder Kaliumsalz oder ein Salz eines Erdalkalimetalls, ausgewählt unter Magnesium oder Calcium, allein oder in einer Mischung, in einem Lösemittel, welches ein oder mehrere Amide umfasst, ist.

2. Superkondensator nach Anspruch 1, **dadurch gekennzeichnet, dass** das kohlenstoffhaltige Material mit hoher spezifischer Oberfläche (BET) eine spezifische Oberfläche zwischen 300 und 3000 m²/g aufweist.

3. Superkondensator nach Anspruch 2, **dadurch gekennzeichnet, dass** das kohlenstoffhaltige Material mit hoher spezifischer Oberfläche (BET) eine spezifische Oberfläche über 1000 m²/g aufweist.

4. Superkondensator nach einem der Ansprüche 1 bis 3, **dadurch gekennzeichnet, dass** jede Elektrode aus einem Film von polymerem Material mit einer spezifischen Oberfläche (BET) über 10 m²/g, vorzugsweise über 20 m²/g, welcher mit kohlenstoffhaltigem Material beladen ist, gebildet wird.

5. Superkondensator nach Anspruch 4, **dadurch gekennzeichnet, dass** das polymere Material Polymere umfasst, die in der aus den Polyolefinen gebildeten Gruppe ausgewählt werden.

6. Superkondensator nach Anspruch 1, **dadurch gekennzeichnet, dass** jede Elektrode aus einem kohlenstoffhaltigen und aktivierten Gewebe mit einer spezifischen Oberfläche (BET) über 1000 m²/g gebildet wird.

7. Superkondensator nach einem der vorangegangenen Ansprüche, **dadurch gekennzeichnet, dass** die Lösung auf einem polaren aprotischen Lösemittel basiert, welches ein Amid der Formel: 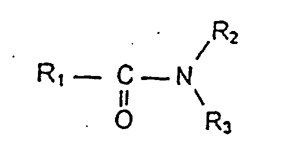 in welcher:
R₁ ein Wasserstoffatom oder ein C₁- bis C₃-Alkylrest ist,
R₂, R₃, die gleich oder verschieden sind, ein Wasserstoffatom oder ein Methyl-, Ethyl- oder Propylrest sind, umfasst.

8. Superkondensator nach Anspruch 7, **dadurch gekennzeichnet, dass** das Amid in der aus Dimethylformamid, Formamid, N-Methylformamid, N-Methylpropionamid, N,N-Dimethylacetamid, allein oder in einer Mischung, gebildeten Gruppe ausgewählt wird.

9. Superkondensator nach Anspruch 1, **dadurch gekennzeichnet, dass** die organische Lösung in einem geringeren Ausmaß ein oder mehrere Lösemittel, welche in der aus den Estern, den Nitrilen, den Carbonaten gebildeten Gruppe ausgewählt werden, umfasst.

10. Superkondensator nach Anspruch 9, **dadurch gekennzeichnet, dass** die in einem geringeren Ausmaß vorhandenen Lösemittel in der aus Propylencarbonat, γ-Butyrolacton, Acetonitril, allein oder in einer Mischung, gebildeten Gruppe ausgewählt werden.

11. Superkondensator nach Anspruch 1, **dadurch gekennzeichnet, dass** das Lösemittel in einer Mischung mit einem Colösemittel, welches in der Lage ist, die Viskosität der Lösung zu erniedrigen, vorliegt.

12. Superkondensator nach Anspruch 11, **dadurch gekennzeichnet, dass** das Colösemittel in der aus Methylformiat, Ethylformiat, Dimethylcarbonat, Diethylcarbonat, Methylacetat, Ethylacetat, Dimethoxymethan, Dimethoxyethan, Diethoxymethan, Diethoxyethan, Dioxolan, Tetrahydrofuran, Acetonitril gebildeten Gruppe ausgewählt wird.

13. Superkondensator nach Anspruch 1, **dadurch gekennzeichnet, dass** das Salz in einer Konzentration von 0,3 bis 3 Mol pro Liter vorhanden ist.

14. Superkondensator nach Anspruch 1 oder 13, **dadurch gekennzeichnet, dass** die Natrium- oder Kaliumsalze in der aus NaCl, NaBr, NaBF₄, NaPF₆, NaClO₄, NaRSO₃, wobei R ein Perfluorniederalkylrest (mit 1 bis 6 Kohlenstoffatomen, insbesondere CF₃) ist, NaAsF₆, NaSCN, KF, KCl, KBr, KBF₄, KPF₆, KNO₃, KClO₄, KRSO₃, wobei R ein Perfluorniederalkylrest (mit 1 bis 6 Kohlenstoffatomen, insbesondere CF₃) ist, KAsF₆ oder KSCN gebildeten Gruppe ausgewählt werden.

15. Superkondensator nach Anspruch 1 oder 13, **dadurch gekennzeichnet, dass** die Erdalkalimetallsalze in der aus MgCl₂, MgSO₄, Mg(ClO₄)₂, CaCl₂, Ca(NO₃)₂, CaSO₄ oder Ca(ClO₄)₂ gebildeten Gruppe ausgewählt werden.

## Claims

1. Ideally polarizable supercapacitor consisting of a positive electrode (2) and its current collector, of a negative electrode (3) and its current collector, the said electrodes comprising a carbon material having a high specific surface area, of a separator (6) and of a nonaqueous liquid electrolyte impregnating the said separator and the said electrodes, **characterized in that** the nonaqueous liquid electrolyte is an organic solution of a salt corresponding to a cation of high mobility, chosen from the family comprising a sodium or potassium salt or an alkaline-earth metal salt chosen from magnesium or calcium, by itself or as a mixture in a solvent comprising one or more amides.

2. Supercapacitor according to Claim 1, **characterized in that** the carbon material having a high specific surface area (BET) has a specific surface area of between 300 and 3000 m²/g.

3. Supercapacitor according to Claim 2, **characterized in that** the carbon material having a high specific surface area (BET) has a specific surface area greater than 1000 m²/g.

4. Supercapacitor according to one of Claims 1 to 3, **characterized in that** each electrode is formed from a film of polymeric material, having a specific surface area (BET) greater than 10 m²/g and preferably greater than 20 m²/g, filled with a carbon material.

5. Supercapacitor according to Claim 4, **characterized in that** the polymeric material comprises polymers chosen from the group consisting of polyolefins.

6. Supercapacitor according to Claim 1, **characterized in that** each electrode is formed from an active carbon cloth having a specific surface area (BET) greater than 1000 m²/g.

7. Supercapacitor according to one of the preceding claims, **characterized in that** the solution is based on an aprotic polar solvent comprising an amide of formula: 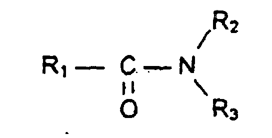 in which:
R₁ is a hydrogen atom or a C₁ to C₃ alkyl radical,
R₂, R₃, which are identical or different, are the hydrogen atom or a methyl, ethyl or propyl radical.

8. Supercapacitor according to Claim 7, **characterized in that** the amide is chosen from the group consisting of dimethylformamide, formamide, N-methylformamide, N-methylpropionamide and N,N-dimethylacetamide, by themselves or as a mixture.

9. Supercapacitor according to Claim 1, **characterized in that** the organic solution comprises, in a minor amount, one or more solvents chosen from the group consisting of esters, nitriles and carbonates.

10. Supercapacitor according to Claim 9, **characterized in that** the minor solvents are chosen from the group consisting of propylene carbonate, γ-butyrolactone and acetonitrile, by themselves or as a mixture.

11. Supercapacitor according to Claim 1, **characterized in that** the solvent is in the form of a mixture with a cosolvent capable of lowering the viscosity of the solution.

12. Supercapacitor according to Claim 11, **characterized in that** the cosolvent is chosen from the group consisting of methyl formate, ethyl formate, dimethyl carbonate, diethyl carbonate, methyl acetate, ethyl acetate, dimethoxymethane, dimethoxyethane, diethoxymethane, diethoxyethane, dioxolane, tetrahydrofuran and acetonitrile.

13. Supercapacitor according to Claim 1, **characterized in that** the salt is present in a concentration of 0.3 to 3 mol per litre.

14. Supercapacitor according to Claim 1 or 13, **characterized in that** the sodium or potassium salts are chosen from the group consisting of NaCl, NaBr, NaBF₄, NaPF₆, NaClO₄ and NaRSO₃, R being a lower perfluoroalkyl radical (having from 1 to 6 carbon atoms, especially CF₃), NaAsF₆, NaSCN, KF, KCl, KBr, KBF₄, KPF₆, KNO₃, KClO₄, KRSO₃, R being a lower perfluoroalkyl radical (having 1 to 6 carbon atoms, especially CF₃), KAsF₆ or KSCN.

15. Supercapacitor according to Claim 1 or 13, **characterized in that** the alkaline-earth metal salts are chosen from the group consisting of MgCl₂, MgSO₄ Mg(ClO₄)₂, CaCl₂, Ca(NO₃)₂, CaSO₄ or Ca(ClO₄)₂.
